Europäisches Patentamt

(19) European Patent Office

Office européen des brevets

(11) Numéro de publication: **0 283 363**
**B1**

(12) **FASCICULE DE BREVET EUROPEEN**

(45) Date de publication du fascicule du brevet:
**27.06.90**

(21) Numéro de dépôt: **88400438.3**

(22) Date de dépôt: **25.02.88**

(51) Int. Cl.⁵: **B60R 5/04**

(54) Aménagement d'une tablette pliante pour véhicule et véhicule automobile équipé de cette tablette.

(30) Priorité: **05.03.87 FR 8703005**

(43) Date de publication de la demande:
**21.09.88 Bulletin 88/38**

(45) Mention de la délivrance du brevet:
**27.06.90 Bulletin 90/26**

(84) Etats contractants désignés:
**DE GB IT**

(56) Documents cités:
**FR-A- 2 087 511**
**GB-A- 2 064 950**

(73) Titulaire: **AUTOMOBILES PEUGEOT, 75, avenue de la Grande Armée, F-75116 Paris(FR)**
Titulaire: **AUTOMOBILES CITROEN, 62 Boulevard Victor-Hugo, F-92200 Neuilly-sur-Seine(FR)**

(72) Inventeur: **Levitre, Gilles, 28, Chemin du Pont Hameau des Chevrins, F-92230 Gennevilliers(FR)**

(74) Mandataire: **Durand, Yves Armand Louis et al, Cabinet Z. Weinstein 20, Avenue de Friedland, F-75008 Paris(FR)**

ACTORUM AG

## Description

La présente invention a essentiellement pour objet un aménagement de tablette pliante destinée notamment à recouvrir l'espace constituant le coffre à bagages d'un véhicule (du type devulgué, par exemple, par GB-A 2 064 040).

Elle vise également un véhicule automobile équipé de cette tablette.

On sait que dans les véhicules automobiles possédant des sièges arrière transformables, les tablettes ont un rôle restreint, à savoir celui de cacher l'espace formant coffre à bagages du véhicule.

Ces tablettes peuvent être monobloc ou constituer deux volets articulés, et sont généralement actionnées par des cordons liés au hayon arrière du véhicule qui les soulève afin de permettre l'accès au coffre.

Lorsqu'on désire transformer le siège arrière, la tablette doit être démontée et elle est le plus souvent laissée à plat sur le dossier rabattu du siège, ce qui constitue un inconvénient, car la tablette constitue alors un objet supplémentaire indépendant et encombrant qui ne sert à rien une fois démonté. Par ailleurs, il faut remarquer que les tablettes connues sont souvent instables et vulnérables en position montée, et leur démontage ainsi que leur manipulation demeurent peu commodes.

La présente invention a pour but de remédier à ces inconvénients en proposant une tablette pliante pour véhicule qui est très stable en position de recouvrement du coffre à bagages du véhicule, qui n'a pas besoin d'être détachée lorsqu'on désire agrandir le volume du coffre à bagages par transformation du siège arrière, et qui en outre possède plusieurs fonctions grâce auxquelles elle peut être utilisée lorsqu'elle n'est pas en position horizontale ou de recouvrement du coffre à bagages.

A cet effet, l'invention a pour objet un aménagement de tablette pliante en particulier pour véhicule automobile, cette tablette comprenant une première portion montée articulée sur la partie supérieure du dossier de siège arrière du véhicule, et une deuxième portion articulée sur ladite première portion pour constituer avec cette dernière un plateau ou analogue susceptible de recouvrir, en position horizontale, le coffre à bagages du véhicule, la première portion étant plus longue que la deuxième portion (voir exemple GB-A 2 064 950), caractérisée en ce que la première portion de la tablette, peut être immobilisée suivant plusieurs positions approximativement verticales par accrochage de la deuxième portion, en position sensiblement perpendiculaire à la première portion, sur divers moyens de fixation solidaires du véhicule.

Suivant une autre caractéristique de l'invention, la seconde portion de la tablette est munie à son extrémité libre opposée à celle articulée sur la première portion, d'ergots latéraux coopérant avec les moyens de fixation précités.

Ces moyens de fixation comprennent des rampes avec encoches susceptibles de recevoir les ergots précités et prévus sensiblement au niveau du plancher du coffre à bagages du véhicule.

Ainsi, en immobilisant la deuxième portion de la tablette dans une encoche ou une autre des rampes, on immobilisera la première portion de cette tablette dans une position approximativement perpendiculaire et plus ou moins espacée du dossier de siège arrière, ce qui permettra de protéger ce dossier, de procurer un calage aux bagages introduits dans le coffre du véhicule, et éventuellement de cacher des petits objets placés contre le dossier.

Les moyens de fixation comprennent encore des éléments de clippage des ergots précités, lesquels éléments sont fixés au niveau du dossier de siège avant du véhicule, par exemple sur les garnitures latérales milieu de la caisse du véhicule.

Ainsi, lorsque l'assise et le dossier du siège arrière seront en position repliée ou rabattue, les deux portions de la tablette pourront constituer un cache et une protection notamment pour l'assise relevée du siège arrière, ainsi qu'un appui positif pour des bagages.

Les éléments de clippage précités peuvent être constitués par des bossages solidaires des garnitures latérales précitées et intérieurement munis de lames-ressort recevant les ergots de la deuxième portion de la tablette.

Suivant encore une autre variante de réalisation de l'invention, la tablette coopère avec des supports escamotables solidaires des garnitures latérales arrière du véhicule.

L'invention vise également un véhicule équipé d'une tablette répondant aux caractéristiques susmentionnées, ce véhicule possédant un siège arrière dont l'assise est relevable vers l'avant du véhicule près du dossier du siège avant, et dont le dossier est rabattable sur l'emplacement de l'assise.

Mais d'autres caractéristiques et avantages de l'invention apparaîtront mieux dans la description détaillée qui suit et se réfère aux dessins annexés, donnés uniquement à titre d'exemple, et dans lesquels :

La figure 1 est une vue schématique partielle en élévation et de côté de la partie arrière d'un véhicule équipé d'une tablette conforme à l'invention et articulée sur le dossier du siège arrière ;

La figure 2 est une vue de côté d'une rampe de fixation réglable de la tablette qui est représentée partiellement ;

La figure 3 est une vue en coupe suivant la ligne III-III de la figure 2 ;

La figure 4 est une vue de côté d'un élément de clippage de la tablette en position de recouvrement de l'assise relevée du siège arrière ;

La figure 5 est une vue en coupe suivant la ligne V-V de la figure 4 ;

La figure 6 est une vue en coupe suivant la ligne VI-VI de la figure 1 d'un support escamotable ; et

La figure 7 est une vue en coupe transversale de la deuxième portion de la tablette, faite au niveau d'une poignée de préhension.

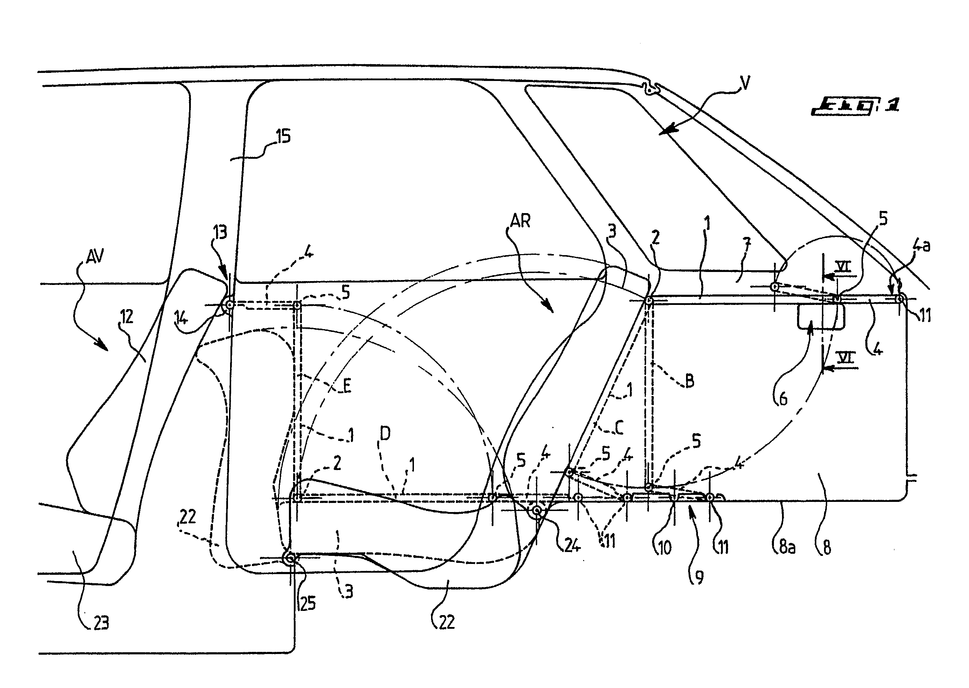

Suivant l'exemple de réalisation représenté, et en se reportant plus particulièrement à la figure 1, une tablette pliante selon cette invention comprend deux éléments ou portions, et à savoir une portion 1 articulée en 2 sur le dossier 3 du siège arrière AR du véhicule V, et une seconde portion 4 articulée en 5 sur la première portion 1.

Cette première portion 1 est, comme on le voit bien sur la figure 1, plus longue que la deuxième portion 4, et est de préférence au moins deux fois plus longue que la portion 4.

La tablette repose sur des supports escamotables 6, bien visibles sur la figure 6, et qui sont liés aux garnitures latérales arrière 7 du véhicule V.

Comme on le voit bien sur la figure 1, la seconde portion 4 de la tablette forme en quelque sorte un volet qui peut pivoter autour de l'articulation 5 et vient en butée sur l'extrémité arrière de la première portion 1 lorsque la tablette toute entière est horizontale comme on le voit en 1a sur la figure 7. En position ouverte, la seconde portion 4 de la tablette peut être rabattue sur la première portion 1 pour permettre un meilleur accès au coffre 8 du véhicule V.

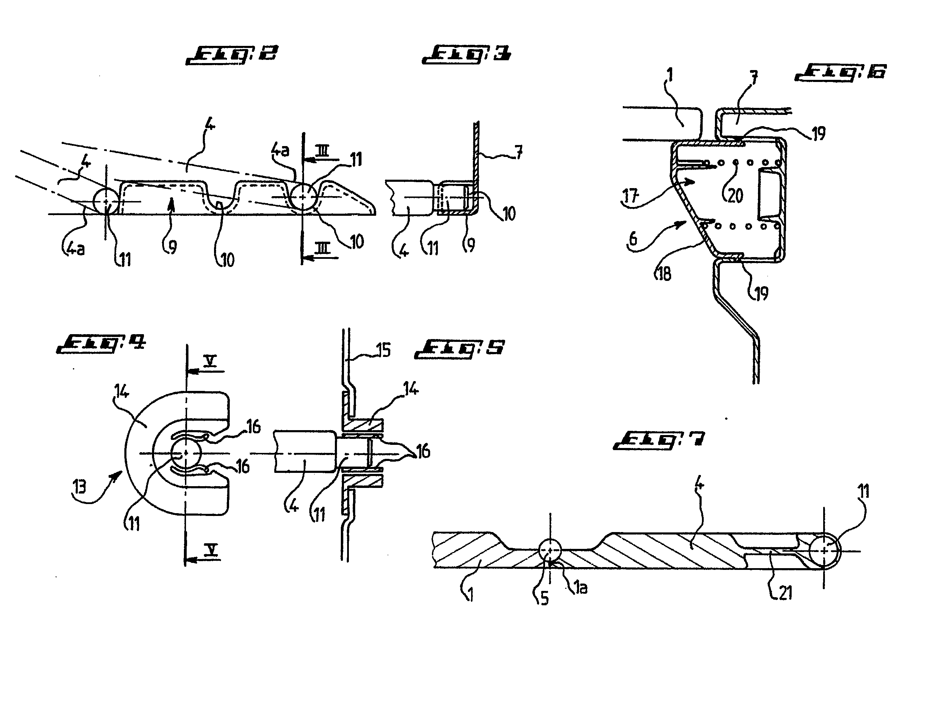

On a montré en 9 sur les figures 1 et 2 une rampe ou analogue munie de plusieurs encoches 10 dans lesquelles peuvent pénètrer des ergots 11 faisant saillie latéralement du bord libre 4a de la seconde portion 4 de la tablette.

Les rampes 9 sont fixées sur le véhicule V et de préférence à la base des garnitures latérales arrière, de sorte que lesdites rampes soient situées approximativement au niveau du plancher 8a du coffre à bagages 8.

Au niveau du dossier 12 du siège avant AV, et à sa partie supérieure, sont prévus des moyens 13 de clippage des ergots latéraux 11 de la seconde portion 4 de la tablette.

Comme on le voit bien sur les figures 1, 4 et 5, ces moyens de clippage 13 revêtent la forme de bossages ou analogues 14 solidaires des garnitures milieu 15 de la caisse du véhicule V et intérieurement munis de lames-ressort 16 destinées à recevoir les ergots 11.

Revenant à la figure 6, on voit que les supports escamotables 6 de la tablette comportent chacun une partie 17 avec pente 18, cette partie 17 étant accrochée en 19 sur les garnitures latérales arrière 7 et étant sollicitée constamment en position de saillie par un ressort 20.

Comme on le voit sur la figure 7, la deuxième portion plus courte 4 de la tablette comporte une poignée de préhension 21.

Mais on expliquera maintenant, en se reportant à la figure 1, le fonctionnement et les diverses fonctions de la tablette qui vient d'être décrite et qui permet de réaliser des aménagements particulièrement avantageux au niveau de l'espace arrière du véhicule V qui comporte un siège ou une banquette arrière AR avec dossier 3 et assise 22, et un siège ou une banquette avant AV avec dossier 12 et assise 23.

Suivant l'exemple représenté, le dossier 3 du siège arrière AR peut être rabattu vers l'avant et à l'horizontale en pivotant autour d'un axe 24, de même que l'assise 22 de ce siège peut être relevée vers l'avant près du dossier 12 du siège avant AV en pivotant autour d'un axe 25.

La position normale du dossier 3 et de l'assise 22 du siège arrière AR est montrée en traits pleins, tandis que la position transformée ou rabattue du dossier 3 et de l'assise 22 est représentée en traits pointillés. De même, on a représenté en traits pleins la tablette en position normale, c'est-à-dire en position de recouvrement du coffre à bagages 8, les autres positions que peut prendre cette tablette étant montrées en traits pointillés.

Lorsque la tablette est dans sa position horizontale d'obturation du coffre à bagages 8, on peut, comme expliqué précédemment, basculer vers le haut la deuxième portion courte 4 pour faciliter l'accès au coffre.

En effectuant une pression sur la partie 18 des supports escamotables 6, la tablette pivote autour de l'axe 2 et prend la position verticale illustrée en B, et on peut la verrouiller suivant différentes positions par l'intermédiaire des ergots 11 de la portion 4 qui peuvent s'enclencher dans telle ou telle encoche 10 des rampes 9. Lorsque la tablette se trouve dans la position vericale B elle constitue avantageusement une surface d'appui et de blocage des bagages dans le coffre 8 et permet de cacher et de caler des petits colis placés derrière le dossier 3. On peut également, grâce aux rampes 9, obtenir la position illustrée en C dans laquelle la portion 1 de la tablette est parfaitement appliquée sur l'arrière du dossier 3 du siège, ce qui procure une augmentation du volume du coffre 8. Il est à remarquer ici que la tablette ne constitue donc pas un objet indépendant, encombrant et gênant dans le coffre 8.

Pour transformer le siège arrière AR du véhicule, on fait pivoter l'assise 22 près du dossier 12 du siège avant, et on fait également pivoter le dossier 3 qui prend, de même que la tablette, une position horizontale, comme illustré en D. Il suffit alors de faire pivoter la tablette par rapport au dossier 3 autour de l'axe 2 pour que la tablette prenne la position visible en E et qui permet, après pivotement de la portion 4 autour de l'axe 5, le verrouillage de cette portion dans les éléments de clippage 13. Une telle position de la tablette sert d'appui positif au chargement du coffre 8 et constitue également une protection de l'assise repliée 22, ainsi qu'une protection des personnes occupant les sièges avant AV.

On effectuera les manoeuvres inverses de celles décrites précédemment pour remettre la tablette en position horizontale.

C'est dire qu'on passera par exemple successivement de la position E, aux positions D et C-B de la tablette lors de la remise en place du dossier 3 en position verticale. Il suffira alors de relever la tablette à l'aide des poignées 21 prévues sur la portion 4, étant entendu que ladite tablette franchira aisément les supports latéraux 6, puisque ceux-ci s'escamoteront automatiquement au contact de la tablette grâce à la partie en pente 18. Une fois franchis, les supports 6, sous l'effet des ressorts 20 reprendront automatiquement la forme visible sur la figure 6 et permettant le supportage de la tablette en position horizontale.

On peut aussi passer directement de la position E à la position horizontale en tirant sur la portion 4 par les poignées 21, cette traction entraînant le relèvement du dossier 3.

Le passage de la position D à la position C peut s'effectuer automatiquement en relevant le dossier 3, l'extrémité libre de la portion 4 glissant sur le plancher jusqu'à ce que les ergots 11 butent contre le bord avant des rampes 9.

## Revendications

1. Aménagement d'une tablette pliante en particulier pour véhicule automobile, cette tablette comprenant une première portion (1) montée articulée (2) sur la partie supérieure du dossier (3) de siège arrière (AR) du véhicule (V) et une deuxième portion (4) articulée (5) sur ladite première portion (1) pour constituer avec cette dernière un plateau ou analogue susceptible de recouvrir, en position horizontale, le coffre à bagages (8) du véhicule, la première portion (1) étant plus longue que la deuxième portion (4), caractérisé en ce que la première portion (1) de la tablette peut être immobilisée suivant plusieurs positions approximativement verticales par accrochage de la deuxième portion (4), en position sensiblement perpendiculaire à la première portion (1), sur divers moyens (9, 13) de fixation solidaires du véhicule (V).

2. Aménagement selon la revendication 1, caractérisé en ce que la seconde portion (4) de la tablette est munie à son extrémité libre (4a) opposée à celle articulée sur la première portion (1), d'ergots latéraux (11) coopérant avec les moyens de fixation précités.

3. Aménagement selon la revendication 2, caractérisé en ce que les moyens de fixation comprennent des rampes (9) avec encoches (10) susceptibles de recevoir les ergots précités (11) et prévus sensiblement au niveau du plancher (8a) du coffre à bagages (8).

4. Aménagement selon l'une des revendications 1 à 3, caractérisé en ce que les moyens de fixation comprennent des éléments de clippage (13) des ergots précités (11), lesquels éléments sont fixés au niveau du dossier (12) de siège avant (AV) du véhicule (V).

5. Aménagement selon la revendication 4, caractérisé en ce que les éléments de clippage précités (13) sont constitués par des bossages (14) solidaires des garnitures latérales milieu (15) de la caisse du véhicule et intérieurement munis de lames-ressort (16) recevant les ergots (11) de la deuxième portion (4) de la tablette.

6. Aménagement selon l'une des revendications précédentes, caractérisé en ce que la tablette (1, 4) coopère avec des supports escamotables (6) solidaires des garnitures latérales arrière (7) du véhicule.

7. Véhicule automobile équipé d'une tablette pliante selon l'une quelconque des revendications 1 à 6 et dont le siège arrière (AR) comporte une assise (22) relevable vers l'avant du véhicule près du dossier (12) de siège avant et un dossier (3) rabattable sur l'emplacement de l'assise (22).

## Patentansprüche

1. Anordnung eines zusammenklappbaren Deckbretts insbesondere für ein Kraftfahrzeug, wobei dieses Deckbrett einen ersten, an dem oberen Teil der Lehne (3) des Rücksitzes (AR) des Fahrzeugs (V) gelenkig angeordneten (2) Teil (1) und einen zweiten an dem besagten ersten Teil (1) angelenkten (5) Teil (4) umfaßt, um mit dem ersten Teil eine für die Abdeckung in waagerechter Lage des Gepäckraumes (8) des Fahrzeugs geeignete Platte oder dergleichen zu bilden, wobei der erste Teil (1) länger ist als der zweite Teil (4), dadurch gekennzeichnet, daß der erste Teil (1) des Deckbretts durch Anhacken des zweiten Teils (4) in zum ersten Teil (1) etwa senkrechter Lage an verschiedenen mit dem Fahrzeug (V) fest verbundenen Befestigungsmitteln (9, 13) in mehreren etwa lotrechten Lagen festgehalten werden kann.

2. Anordnung nach Anspruch 1, dadurch gekennzeichnet, daß der zweite Teil (4) des Deckbretts an seinem dem ersten Teil (1) angelenkten Ende entgegengesetzten freien Ende (4a) mit, mit dem vorgenannten Befestigungsmitteln zusammenwirkenden Seitenzapfen (11) versehen ist.

3. Anordnung nach Anspruch 2, dadurch gekennzeichnet, daß die Befestigungsmittel Schienen (9) auweisen, mit zur Aufnahme der vorgenannten Zapfen (11) geeigneten und etwa in der Höhe des Bodens (8a) des Gepäckraumes (8) vorgesehenen Kerben (10).

4. Anordnung nach einem der Ansprüche 1 bis 3, dadurch gekennzeichnet, daß die Befestigungsmittel Elemente (13) zum Einklemmen der vorgenannten Zapfen (11) umfassen, welche Elemente in der Höhe der Lehne (12) des Vordersitzes (AV) des Fahrzeuges (V) befestigt sind.

5. Anordnung nach Anspruch 4, dadurch gekennzeichnet, daß die vorgenannten Klemmelemente (13) durch mit den mittleren seitlichen Ausstattungsbesätzen (15) des Fahrzeugkastens fest verbundene Buchsenansätze (14) gebildet sind, welche innen mit die Zapfen (11) des zweiten Teiles (4) des Deckbretts aufnehmenden Federblättern (16) versehen sind.

6. Anordnung nach einem der vorangehenden Ansprüche, dadurch gekennzeichnet, daß das Deckbrett (1, 4) mit einziehbaren, mit den hinteren seitlichen Ausstattungsbesätzen (7) des Fahrzeugs befestigten Abstützungshalter (6) zusammenwirken.

7. Mit einem klappbaren Deckbrett gemäß irgendeinem der Ansprüche 1 bis 6 ausgerüstetes Kraftfahrzeug, dessen Rücksitz (AR) eine nach vorne des Fahrzeugs nahe der Vordersitzlehne (12) aufklappbare Sitzfläche (22) und eine auf den Platz der Sitzfläche (22) herunterklappbare Lehne (3) aufweist.

## Claims

1. Arrangement of a folding shelf in particular for an automotive vehicle, this shelf comprising a first portion (1) mounted to be articulated (2) onto the upper part of the back (3) of the rear seat (AR) of the vehicle (V) and a second portion (4) articulated (5) onto the said first portion (1) to constitute with the latter a plate or the like susceptible of covering in the horizontal position the luggage boot (8) of the vehicle, the first portion (1) being longer than the second portion (4), characterized in that the first portion (1) of the shelf may be held against motion in several approximately vertical positions by hooking of the second portion (4) in a position substantially perpendicular to the first portion (1) onto various fastening means (9, 13) secured to the vehicle (V).

2. Arrangement according to claim 1, characterized in that the second portion (4) of the shelf is provided at its free end (4a) opposite to that articulated onto the first portion (1), with lateral stub pins (11) co-operating with the aforesaid fastening means.

3. Arrangement according to claim 2, characterized in that the fastening means comprise rails (9) with notches (10) susceptible of receiving the aforesaid stub pins (11) and provided substantially at the level of the floor (8a) of the luggage boot (8).

4. Arrangement according to one of the claims 1 to 3, characterized in that the fastening means comprise elements (13) for clipping the aforesaid stub pins (11), which elements are fastened at the level of the back (12) of the front seat (AV) of the vehicle (V).

5. Arrangement according to claim 4, characterized in that the aforesaid clipping elements (13) are constituted by bosses (14) made fast with lateral middle fittings (15) of the body of the vehicle and provided inside with spring blades (16) receiving the stub pins (11) of the second portion (4) of the shelf.

6. Arrangement according to one of the preceding claims, characterized in that the shelf (1, 4) cooperates with retractable supports (6) made fast with the lateral rear fittings (7) of the vehicle.

7. Automotive vehicle fitted with a folding shelf according to any one of the claims 1 to 6 and the rear seat (AR) of which comprises a seating (22) foldable upwards towards the front of the vehicle close to the back (12) of the front seat and a back (3) foldable downwards onto the location of the seating (22).

Fig.1

# Fig. 2

# Fig. 3

# Fig. 6

# Fig. 4

# Fig. 5

# Fig. 7

EP 0 283 363 B1